Europäisches Patentamt

**European Patent Office**

**Office européen des brevets**

(19)

(11) Publication number: **0 035 312**
A1

# (12) EUROPEAN PATENT APPLICATION

(21) Application number: **81200225.1**

(22) Date of filing: **25.02.81**

(51) Int. Cl.³: **A 01 G 27/00**

(30) Priority: **27.02.80 BE 199582**

(43) Date of publication of application: **09.09.81**
**Bulletin 81/36**

(84) Designated Contracting States: **AT CH DE FR GB IT LI LU NL SE**

(71) Applicant: **Thienpont, Suzanne, Rivierstraat, 70, B-9131 Beervelde (BE)**

(72) Inventor: **Thienpont, Suzanne, Rivierstraat, 70, B-9131 Beervelde (BE)**

(74) Representative: **Pirson, Jean et al, c/o Bureau Gevers, S.A. rue de Livourne, 7 bte 1, B-1050 Brussels (BE)**

(54) Cultivating pot for various plants, particularly decorative plants and notably azaleas, and method used thereby.

(57) There is described a cultivating pot for various plants, particularly decorative plants which is comprised of an inner holder (2) with perforated bottom (3) for receiving the mould the plant roots grow in, and a container (1) connecting concentrically to said holder (2) for receiving a volume of water (7); said holder (2) and container (1) are preferably comprised of two discrete elements which can be pressed together with the free edges thereof to form a water-tight connection along said edges.

"Cultivating pot for various plants, particularly decorative plants and notably azaleas, and method used thereby"

This invention pertains to a cultivating pot for various plants, particularly decorative plants and notably azaleas.

Both the transport and standing for a few days inside markets and shops result in a problem for watering plants cultivated in holders or pots. The same problem will naturally be present after the sale as far as the buyer neglects the sprinkling or watering of the plants.

There have already been proposed to solve said problem partly at least, various containers, cultivating pots or so-called "pot covers" which may contain a water reserve and which are thereby also possibly provided with wicks to let that water present inside said container, reach the earth ball wherein the roots have grown and which can be comprised of a conventional flower pot.

Such solution is in some way satisfactory but requires time-consuming operations to cut to length the wicks or to bring the cut wicks through the holder or flower pot bottom to the bottom of the pot cover which will surround same.

The holder or flower pot should also be removable from the container or pot cover or between both said components should be provided in at least one location, a large enough volume to fill up the water reserve to the required level.

The invention has for object to obviate the above drawbacks as well as other drawbacks from the cultivating pots or pot covers known up to now and moreover to provide an original solution whereby a possibility is given to arrange a large enough water reserve, in such a way that the plants do not require any sprinkling or watering for a few days (up to one week or more), while the watering anew of that earth ball wherein the plant roots have grown may be performed very easily.

To this end the cultivating pot according to the invention is comprised of an inner holder with perforated bottom to receive the mould wherein the plants grow, and a container connecting concentrically to said holder for receiving a volume of water.

In a preferred embodiment of the invention, said holder and container are comprised of two discrete elements which may be pressed together with the free edges thereof to form a watertights connection along said edges.

Said holder is advantageously provided with an outwardly-projecting rim whereby said holder cannot be pressed deeper than designed inside said container, in such a way that said water-tight connection is obtained.

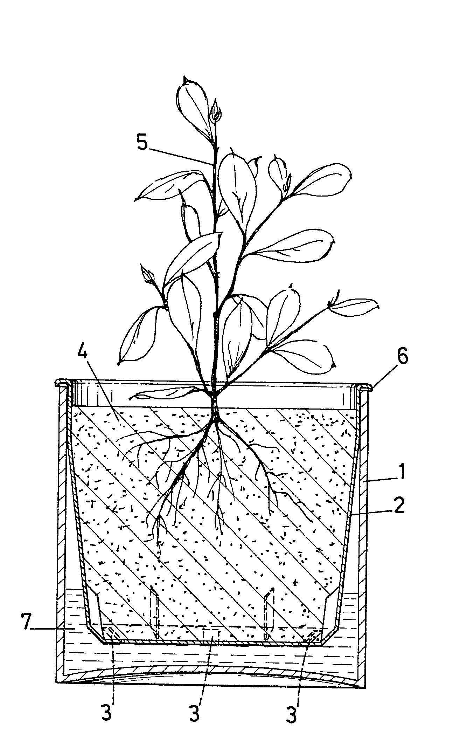

Other details and features of the invention will stand out from the following description, given by way of non limitative example and with reference to the accompanying drawings, in which the single figure shows a lengthwise section along the lengthwise axis of the cultivating pot according to the invention.

In the example of embodiment as shown in the figure, the cultivating pot according to the invention is comprised of a container 1 and a holder 2 slipped therein, said holder 2 being provided with a plurality of holes 3 in the bottom thereof. Said holder 2 forms the flower pot proper and contains mould or compost 4 wherein the roots from a plant 5 have grown.

The plant may have been replanted in the mould 4 inside holder 2, but said plant may also be grown directly therein; this will be dependent on the plant nature and the growing method.

The container 1 is preferably formed from a less resilient material than the material said holder 2 is made of. For example said container 1 may be made from PVC while the holder 2 is made from a more flexible plastic material.

At the top said holder 2 is provided with a rim 6 whereby said holder 2 cannot sink deeper inside container 1 than normally provided for.

That volume water 7 which forms the water supply or reserve of the cultivating pot may be poured beforehand in container 1, but such water may also originate from watering on the surface of mould 4.

When said container has a purely cylindrical shape, it is to be preferred to design the top part from holder 2 with a slightly conical or also cylindrical shape. The outer diameter of the top part from said holder 2 is then preferably somewhat larger than or equal to the inner diameter of said cylindrical container 1. The holder 2 is thereby firmly clamped inside container 1 and also due to the provision of rim 6, the required water-tight connection is obtained between said holder and container.

Consequently to water anew the mould when the water supply 7 has been partly depleted and does not reach the required level any more, it is but necessary to turn the cultivating pots over.

Such operation may be made by hand, but it is also possible to provide such a packing of the cultivating pots that said packing by rotating thereof over 180° about the approximately horizontal axis thereof, will insure the watering of the mould inside a plurality of cultivating pots arranged inside said packing.

In the example as described above, the container 1 is purely cylindrical and the holder 2 slightly conical, to the exception of the top part from said holder which is provided to insure the required water-tight connection of both elements together.

It is clear that the invention is not limited to such a shape and that the same results may be expected from containers and holders which do not have a circle-like cross-section (for instance with a triangular, quadrangular or polygonal shape). It is enough for the material the holder 2 is made of to have such a resiliency as to be clampable over the top free edge from any suitable container 1.

As already described above, the original feature of the invention lies not only in the possibility of arranging a water reserve, but also in the possibility of using such reserve completely for watering the mould in the inverted position of the cultivating pot. Should the water reserve after a longer period of time, be completely depleted, such reserve may be renewed by watering the mould on the top side thereof.

It must be understood that the invention is in no way limited to the above embodiments and that many changes may be brought therein without departing from the scope of the invention as defined in the appended claims.

## CLAIMS.

1. Cultivating pot for various plants, particularly decorative plants and notably azaleas, which is comprised of an inner holder with perforated bottom to receive the mould wherein the plants grow, and a container connecting concentrically to said holder for receiving a volume of water.

2. Cultivating pot as defined in claim 1, in which said holder and container are comprised of two discrete elements which may be pressed together with the free edges thereof to form a water-tight connection along said edges.

3. Cultivating pot as defined in claim 2, in which said holder is provided with an outwardly-projecting rim whereby said holder cannot be pressed deeper than designed inside said container, in such a way that said water-tight connection is obtained.

4. Cultivating pot as defined in either one of claims 2 and 3, in which said holder is made from a flexible material, preferably from a flexible plastic material.

5. Cultivating pot as defined in any one of claims 2 to 4, in which said container is made from a hard or at least less flexible material relative to that material the holder is made of.

6. Packing for a plurality of cultivating pots as defined in any one of claims 1 to 5, which comprises means to retain said cultivating pots containing plants, particularly decorative plants and notably azaleas, in such a way that said

0035312

packing may be swung over 180° together with said pots to let the water contained in said containers water the mould.

7. Method for retaining moist during the transport or sale time, the mould from plants, particularly decorative plants, which comprises growing said plants in cultivating pots which are comprised at least partly of a holder and a container connecting around same, said container being partly filled with water as defined in any one of claims 1 to 5, and turning said plants together with said pots arranged or not in a packing as defined in claim 6, over 180° to insure watering of the plant mould.

8. Cultivating pots as described above with reference to the accompanying drawing.

9. Packing for a plurality of cultivating pots, as described above.

10. Method for retaining plant mould moist, as described above.

**European Patent Office**

**EUROPEAN SEARCH REPORT**

0035312
Application number

EP 81 20 0225.1

## DOCUMENTS CONSIDERED TO·BE RELEVANT

| Category | Citation of document with indication, where appropriate, of relevant passages | Relevant to claim |
|---|---|---|
| | DE – U – 7 209 409 (H. KOSSMANN)<br>* page 3; fig. 2 * | 1-5 |
| | US – A – 4 001 967 (J.H. SWIFT et al.)<br>* claims 1, 4 to 7; fig. 1, 4, 9 * | 1-4 |
| | GB – A – 1 373 343 (W.J. SMITH)<br>* claim 1; fig. 1 * | 1 |
| | DE – U – 1 944 125 (B. UPPENKAMP et al.)<br>* claim 1; fig. 1, 2 * | 1 |
| A | DE – A – 2 106 439 (E. BEGER)<br>* page 2, fig. * | 1 |

**CLASSIFICATION OF THE APPLICATION (Int. Cl.³)**

A 01 G 27/00

**TECHNICAL FIELDS SEARCHED (Int. Cl.³)**

A 01 G  9/02

A 01 G 27/00

**CATEGORY OF CITED DOCUMENTS**

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 14-05-1981 | SCHOFER |

EPO Form 1503.1  06.78